# FASCICULE DE BREVET EUROPEEN

(11) **EP 2 868 356 B1**
(45) Date de publication et mention de la délivrance du brevet: **28.09.2016**
(21) Numéro de dépôt: 14190965.5
(22) Date de dépôt: 29.10.2014
(51) Int. Cl.: A63F 13/98

(54) **Station d'accueil de console de jeux vidéo**
Dockingstation für Videospielkonsole
Docking station for video game console

(30) Priorité: 04.11.2013 FR 1360793
(43) Date de publication de la demande: 06.05.2015
(73) Titulaire: Bigben Interactive SA, 59814 Lesquin Cedex (FR)
(72) Inventeur: Falc, Alain, 8500 Kortrijk (BE); Allaert, Yannick, 62410 Meurchin (FR)
(74) Mandataire: Vigand, Philippe

(56) Documents cités:
- GB-A- 2 185 388
- JP-U- 3 134 799
- US-A- 5 295 648
- US-A1- 2012 205 334

## Description

La présente invention concerne de manière générale une station d'accueil pour console de jeux vidéo.

Il est connu dans l'art antérieur des stations d'accueil pour console de jeux vidéo. Plusieurs type ou modèles de consoles de jeux vidéo sont sur le marché, et comme leur dimensions sont spécifiques, il faut à chaque fois prévoir une station d'accueil spécifique. Par exemple, le document GB2185388A décrit un berceau support pour un objet informatique, et le document US5295648A décrit un système de stand pour ordinateur ajustable.

Un but de la présente invention est de répondre aux inconvénients des documents de l'art antérieur mentionnés ci-dessus et en particulier, tout d'abord, de proposer une station d'accueil pour recevoir différents types de consoles de jeux vidéo, sans pour autant dupliquer les composants de la station d'accueil.

Pour cela un premier aspect de l'invention concerne une station d'accueil pour une console de jeux vidéo, comprenant :
- deux ailes latérales,
- au moins un élément de liaison agencé pour se monter entre les deux ailes latérales,
- des moyens de mise en largeur des ailes latérales pour définir une largeur extérieure de la station d'accueil,
caractérisée en ce que l'élément de liaison est agencé pour se monter entre les deux ailes latérales selon :
- une première position, dans laquelle les moyens de mise en largeur définissent une première largeur extérieure de la station d'accueil ;
- une deuxième position, dans laquelle les moyens de mise en largeur définissent une deuxième largeur extérieure de la station d'accueil, différente de la première largeur.

La station d'accueil selon la présente invention comprend un élément de liaison qui, dans une première position de montage, positionne les ailes latérales à une première largeur, et, dans une deuxième position de montage, positionne les ailes latérales à une deuxième largeur. Il est ainsi possible, avec les mêmes composants de configurer la station d'accueil pour une console de jeux vidéo ou une autre.

Avantageusement, la première largeur extérieure correspond à une largeur extérieure d'une première console de jeux vidéo, et la deuxième largeur extérieure correspond à une largeur extérieure d'une deuxième console de jeux vidéo.

Avantageusement, les moyens de mise en largeur comprennent:
- des premières liaisons glissière entre chaque aile latérale et l'élément de liaison,
- des deuxièmes liaisons glissière entre chaque aile latérale et l'élément de liaison,
les premières liaisons glissières ayant une première longueur, et les deuxièmes liaisons glissières ayant une deuxième longueur.

Avantageusement :
- sur l'élément de liaison, les premières liaisons glissière et les deuxièmes liaisons glissière sont confondues,
- sur chaque aile latérale, les premières liaisons glissière sont agencées à une première extrémité sur une première longueur, et les deuxièmes liaisons glissière sont agencées à une autre extrémité opposée sur une deuxième longueur. Typiquement, une liaison glissière comprend une première partie sur une première pièce et une deuxième partie sur une autre pièce, l'une des parties coulissant dans l'autre. Dans cette mise en oeuvre, sur l'élément de liaison, les premières liaisons glissières et deuxième liaisons glissières sont confondues, cela signifie qu'une seule et même partie de l'élément de liaison peut s'engager avec l'autre partie des premières liaison glissières ou l'autre partie des deuxièmes liaison glissière, qui sont sur chaque aile latérale.

Avantageusement, la station d'accueil comprend un outre un deuxième élément de liaison entre les ailes latérales, agencé pour former un pont au dessus d'une console de jeux vidéo posée sur la station d'accueil.

Avantageusement, le deuxième élément de liaison comprend des moyens de coulissement agencés pour permettre de passer de la première largeur à la deuxième largeur.

Avantageusement, l'élément de liaison porte :
- une première inscription relative à la première largeur, agencée pour être visible par un utilisateur dans la première position de montage uniquement, et
- une deuxième inscription relative à la deuxième largeur, agencée pour être visible par un utilisateur dans la deuxième position de montage uniquement. La mise en configuration est facilitée pour un utilisateur qui n'a que les inscriptions à positionner correctement. On peut envisager d'utiliser des flèches ou des repères visuels couleur qui sont apposés sur l'élément de liaison et en regard sur les ailes latérales. On peut envisager d'écrire la référence de la console de jeu vidéo.

Autrement dit, l'invention concerne une station d'accueil pour une console de jeux vidéo, comprenant :
- deux ailes latérales,
- au moins un élément de liaison agencé pour se monter entre les deux ailes latérales,
caractérisée en ce que l'élément de liaison est agencé pour se monter entre les deux ailes latérales selon :
- une première position, dans laquelle il définit une première largeur extérieure de la station d'accueil ;
- une deuxième position, dans laquelle il définit une deuxième largeur extérieure de la station d'accueil, différente de la première largeur,
et en ce qu'elle comprend :
- des premières liaisons glissière entre chaque aile latérale et l'élément de liaison pour le montage dans la première position,
- des deuxièmes liaisons glissière entre chaque aile latérale et l'élément de liaison pour le montage dans la deuxième position,
les premières liaisons glissières ayant une première longueur de coulissement, et les deuxièmes liaisons glissières ayant une deuxième longueur de coulissement, différente de la première longueur de coulissement.

La station d'accueil comprend des liaison glissières distinctes pour permettre une mise en largeur aisée et directe en fonction de la console de jeux qu'il faut faire reposer sur la station d'accueil. Comme les liaisons glissières sont agencées pour effectuer une mise en largeur de la station d'accueil, il va de soi que ces liaisons glissières ont au moins une composante selon la largeur de la station, et éventuellement coulissent uniquement selon la largeur de la station d'accueil.

D'autres caractéristiques et avantages de la présente invention apparaîtront plus clairement à la lecture de la description détaillée qui suit d'un mode de réalisation de l'invention donné à titre d'exemple nullement limitatif et illustré par le dessin annexé, dans lequel :

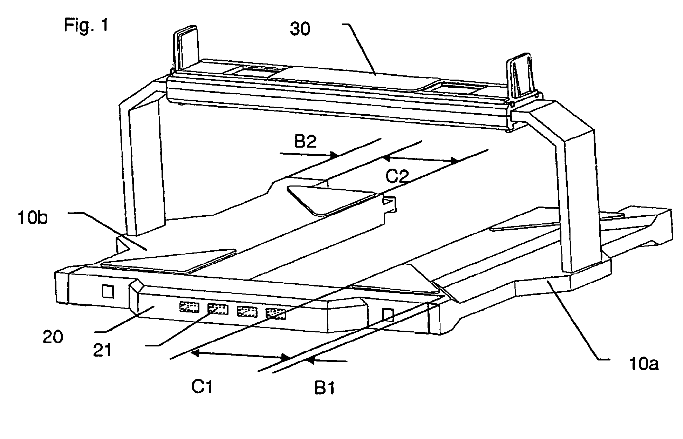

- la figure 1 représente une vue isométrique d'une station d'accueil selon la présente invention.

La figure 1 représente une station d'accueil pour une console de jeux vidéo. Un élément de liaison 20 relie une aile latérale 10a à une autre aile latérale 10b. Cet assemblage de l'élément de liaison 20 avec les ailes latérales 10a et 10b forme un plan sur lequel on peut poser une console de jeux vidéo.

Un deuxième élément de liaison 30 forme un pont entre les ailes latérales 10a et 10b, et peut offrir un appui pour une camera ou des manettes de jeux par exemple, au dessus d'une console de jeux vidéo reposant sur l'élément de liaison 20 et les ailes latérales 10a et 10b..

L'élément de liaison 20 a été enfilé dans chaque aile latérale 10a, 10b par coulissement d'une rainure dans un élément en queue d'aronde, sur une longueur de coulissement C1. Chaque aile latérale comprend une butée mécanique pour l'élément de liaison 20 à une distance B1 de son bord externe.

Le montage de l'élément de liaison 20 selon la première position représentée, en fonction de la longueur de coulissement C1 et de la position B1 de la butée mécanique, impose une première largeur extérieure à la station d'accueil.

Chaque aile latérale 10a, 10b comprend une deuxième glissière agencée à l'arrière sur la figure 1, dans lesquelles l'élément de liaison 20 peut également être enfilé, et définissant une deuxième longueur de coulissement C2, grâce au positionnement de la butée mécanique à une deuxième distance B2 des bords externes. Il va de soi dans l'exemple présenté que les ailes latérales 10a et 10b sont symétriques en ce qui concerne les glissières.

Il en résulte qu'en montant l'élément de liaison 20 à l'autre extrémité des ailes latérales, dans une deuxième position de montage donc, alors la station d'accueil sera mise à une deuxième largeur externe, différente de la première largeur. Autrement dit, chaque aile latérale présente deux extrémités avec à chaque extrémité une partie d'une glissière (un tenon ou une rainure) d'une longueur spécifique pour s'engager avec l'élément de liaison 20 et définir ainsi une largeur spécifique de la station d'accueil globale.

Avantageusement, les composants de la station d'accueil seront dimensionnés pour que la première largeur corresponde à la largeur d'un premier modèle de console de jeux vidéo, et la deuxième largeur corresponde à la largeur d'un deuxième modèle de console de jeux vidéo.

On peut noter que l'élément de liaison 20 comprend des ports de connexion 21 pour permettre un échange d'énergie ou de données avec la console de jeu, la station d'accueil ou des périphériques comme des contrôleurs de jeux. Cependant, ces ports de connexion 21 ne sont qu'une option et la station d'accueil peut être simplement destinée à fournir un support stable à la console de jeu.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Station d'accueil pour une console de jeux vidéo, comprenant :
- deux ailes latérales (10a, 10b),
- au moins un élément de liaison (20) agencé pour se monter entre les deux ailes latérales (10a, 10b) selon :
- une première position, dans laquelle les ailes latérales (10a, 10b) et l'élément de liaison (20) définissent une première largeur extérieure de la station d'accueil ;
- une deuxième position, dans laquelle les ailes latérales (10a, 10b) et l'élément de liaison (20) définissent une deuxième largeur extérieure de la station d'accueil, différente de la première largeur,
**caractérisée en ce que** la station d'accueil comprend :
- des premières liaisons glissière entre chaque aile latérale (10a, 10b) et l'élément de liaison (20) pour le montage dans la première position,
- des deuxièmes liaisons glissière entre chaque aile latérale (10a, 10b) et l'élément de liaison (20) pour le montage dans la deuxième position,
les premières liaisons glissières ayant une première longueur de coulissement (C1), et les deuxièmes liaisons glissières ayant une deuxième longueur de coulissement (C2), différente de la première longueur de coulissement (C1), lesdites longueurs de coulissement différentes (C1, C2) étant réalisées grâce au positionnement de butées mécaniques sur les ailes latérales (10a, 10b).

2. Station d'accueil selon la revendication précédente, dans laquelle la première largeur extérieure correspond à une largeur extérieure d'une première console de jeux vidéo, et dans laquelle la deuxième largeur extérieure correspond à une largeur extérieure d'une deuxième console de jeux vidéo.

3. Station d'accueil selon la revendication 1 ou 2, dans laquelle :
- sur l'élément de liaison (20), les premières liaisons glissière et les deuxièmes liaisons glissière sont confondues,
- chaque aile latérale présente une extrémité avant et une extrémité arrière,
- sur chaque aile latérale (10a, 10b), les premières liaisons glissière sont agencées à une première extrémité avant, sur une première longueur de coulissement (C1), et les deuxièmes liaisons glissière sont agencées à une autre extrémité arrière opposée, sur une deuxième longueur de coulissement (C2).

4. Station d'accueil selon l'une des revendications précédentes, comprenant un outre un deuxième élément de liaison (30) entre les ailes latérales (10a, 10b), agencé pour former un pont au dessus d'une console de jeux vidéo posée sur la station d'accueil.

5. Station d'accueil selon la revendication précédente, dans laquelle le deuxième élément de liaison (30) comprend des moyens de coulissement agencés pour permettre de passer de la première largeur à la deuxième largeur.

6. Station d'accueil selon l'une des revendications précédentes, dans laquelle l'élément de liaison (20) porte :
- une première inscription relative à la première largeur, agencée pour être visible par un utilisateur dans la première position de montage uniquement, et
- une deuxième inscription relative à la deuxième largeur, agencée pour être visible par un utilisateur dans la deuxième position de montage uniquement.

## Patentansprüche

1. Empfangsstation für eine Videospielkonsole, umfassend:
- zwei seitliche Flügel (10a, 10b),
- mindestens ein Verbindungselement (20), das für die Montage zwischen den zwei seitlichen Flügeln (10a, 10b) ausgebildet ist gemäß:
- einer ersten Position, in welcher die seitlichen Flügel (10a, 10b) und das Verbindungselement (20) eine erste äußere Breite der Empfangsstation definieren;
- einer zweiten Position, in welcher die seitlichen Flügel (10a, 10b) und das Verbindungselement (20) eine zweite äußere Breite der Empfangsstation definieren, die sich von der ersten Breite unterscheidet,
**dadurch gekennzeichnet, dass** die Empfangsstation umfasst:
- erste Gleitschienenverbindungen zwischen jedem seitlichen Flügel (10a, 10b) und dem Verbindungselement (20) für die Montage in der ersten Position,
- zweite Gleitschienenverbindungen zwischen jedem seitlichen Flügel (10a, 10b) und dem Verbindungselement (20) für die Montage in der zweiten Position,
wobei die ersten Gleitschienenverbindungen eine erste Gleitlänge (C1) haben und die zweiten Gleitschienenverbindungen eine zweite Gleitlänge (C2) haben, die sich von der ersten Gleitlänge (C1) unterscheidet, wobei die unterschiedlichen Gleitlängen (C1, C2) dank der Positionierung von mechanischen Anschlägen auf den seitlichen Flügeln (10a, 10b) realisiert sind.

2. Empfangsstation nach vorangehendem Anspruch, wobei die erste äußere Breite einer äußeren Breite einer ersten Videospielkonsole entspricht und wobei die zweite äußere Breite einer äußeren Breite einer zweiten Videospielkonsole entspricht.

3. Empfangsstation nach Anspruch 1 oder 2, wobei:
- auf dem Verbindungselement (20) die ersten Gleitschienenverbindungen und die zweiten Gleitschienenverbindungen ineinander übergehen,
- jeder seitliche Flügel ein vorderes Ende und ein hinteres Ende aufweist,
- auf jedem seitlichen Flügel (10a, 10b) die ersten Gleitschienenverbindungen an einem ersten vorderen Ende auf einer ersten Gleitlänge (C1) ausgebildet sind und die zweiten Gleitschienenverbindungen an einem anderen, entgegengesetzten hinteren Ende auf einer zweiten Gleitlänge (C2) ausgebildet sind.

4. Empfangsstation nach einem der vorangehenden Ansprüche, umfassend ferner ein zweites Verbindungselement (30) zwischen den seitlichen Flügeln (10a, 10b), das ausgebildet ist, um eine Brücke über einer auf der Empfangsstation aufgestellten Videospielkonsole zu bilden.

5. Empfangsstation nach vorangehendem Anspruch, wobei das zweite Verbindungselement (30) Gleitmittel umfasst, die ausgebildet sind, um den Übergang von der ersten Breite zur zweiten Breite zu erlauben.

6. Empfangsstation nach einem der vorangehenden Ansprüche, wobei das Verbindungselement (20) trägt:
- eine erste Aufschrift, die sich auf die erste Breite bezieht, die ausgebildet ist, um für einen Benutzer nur in der ersten Montageposition sichtbar zu sein, und
- eine zweite Aufschrift, die sich auf die zweite Breite bezieht, die ausgebildet ist, um für einen Benutzer nur in der zweiten Montageposition sichtbar zu sein.

## Claims

1. A docking station for a video game console comprising:
- two side wings (10a, 10b),
- at least one connecting element (20) arranged so as to be mounted between two side wings (10a, 10b) according to :
- a first position, in which the side wings (10a, 10b) and the connecting element (20) define a first outer width of the docking station;
- a second position, in which the side wings (10a, 10b) and the connecting element (20) define a second outer width of the docking station, different from the first width, **characterized in that** the docking station comprises:
- first slider connections between each side wing (10a, 10b) and the connecting element (20) for the mounting in the first position,
- second slider connections between each side wing (10a, 10b) and the connecting element (20) for the mounting in the second position,
the first slider connections having a first sliding length (C1), and the second slider connections having a second sliding length (C2), different from the first sliding length (C1), said different sliding lengths (C1, C2) being achieved by the positioning of mechanical abutments on the side wings (10a, 10b).

2. The docking station according to the preceding claim, wherein the first outer width corresponds to an outer width of a first video game console, and wherein the second outer width corresponds to an outer width of a second video game console.

3. The docking station according to claim 1 or 2, wherein:
- on the connecting element (20), the first slider connections and the second slider connections coincide,
- each side wing has a front end and a rear end,
- on each side wing (10a, 10b), the first slider connections are arranged at one front end, over a first sliding length (C1), and the second slider connections are arranged at another opposite end, over a second sliding length (C2).

4. The docking station according to one of the preceding claims, further comprising a second connecting element (30) between the side wings (10a, 10b), arranged so as to form a bridge above a video game console laid on the docking station.

5. The docking station according to the preceding claim, wherein the second connecting element (30) comprises sliding means arranged so as to allow passing from the first width to the second width.

6. The docking station according to one of the preceding claims, wherein the connecting element (20) bears:
- a first inscription relative to the first width, arranged so as to be visible by a user in exclusively the first mounting position, and
- a second inscription relative to the second width, arranged so as to be visible by a user in exclusively the second mounting position.
